# EUROPEAN PATENT APPLICATION

(11) **EP 2 869 163 A1**
(43) Date of publication of application: **06.05.2015**
(21) Application number: 14188870.1
(22) Date of filing: 14.10.2014
(51) Int. Cl.: G06F 3/023, H01H 13/70, H03K 17/96, G06F 3/0488, G06F 3/01

(54) **Method of controlling the actuation of a user interface**

(30) Priority: 05.11.2013 US 201314072015
(71) Applicant: Whirlpool Corporation, Benton Harbor, MI 49022 (US)
(72) Inventor: Jaske, Matthew J., 21025 Comerio (IT); Matonich, Matthew J., 21025 Comerio (IT)
(74) Representative: Guerci, Alessandro

(57) **Abstract**

A method of controlling the state of a user interface (UI) (10, 110, 210) having a plurality of discrete touch-sensitive inputs (12, 14, 16, 18, 20, 22, 24). The method includes detecting inputs (12, 14, 16, 18, 20, 22, 24) and controlling the state of the UI (10, 110, 210) based on the detected inputs (12, 14, 16, 18, 20, 22, 24).

## Description

### FIELD OF THE DISCLOSURE

This disclosure relates generally to a method of controlling the actuation of a user interface having a plurality of discrete touch-sensitive inputs.

### DESCRIPTION OF THE RELATED ART

A user interface is a device where interaction between users and machines occurs. The interaction may provide uni- or bi-directional communication between the user and the machine, for example, by allowing the user to control operation of the machine on the user's end, and by allowing the machine to provide feedback or information to the user.

Existing appliances have issues with accidental selection of cycles or optional features on touch-sensitive appliance user interfaces.

### BRIEF DESCRIPTION OF THE INVENTION

It is an object of the present invention to overcome at least the above problems. According to the invention, such object is reached by a method of controlling the actuation of a user interface (UI) having a plurality of discrete touch-sensitive inputs. The method includes detecting a sequential touching of at least two adjacent inputs, determining when the sequential touching is indicative of a swiping motion by a user across the at least two adjacent inputs, and actuating the UI when a swiping motion is indicated.

### BRIEF DESCRIPTION OF THE DRAWINGS

In the drawings:
FIG. 1 is a perspective view illustrating a portion of the user interface of a dishwasher appliance in accordance with a first embodiment of the invention;
FIG. 2 is a perspective view illustrating a portion of the user interface of a laundry washing appliance in accordance with a second embodiment of the invention.
FIG. 3 is a perspective view illustrating a portion of the user interface of an oven appliance in accordance with a third embodiment of the invention.

### DESCRIPTION OF EMBODIMENTS OF THE INVENTION

While the invention may be implemented in any apparatus or device having a user interface (UI) for providing interaction between a human user and a machine, it is currently exemplified to be implemented in a home appliance, non-limiting examples of which may include a dishwasher, laundry washer, or oven. Each appliance may comprise a UI coupled with a controller such that the interaction between the user and the appliance may define or perform a cycle of operation in response to the interaction.

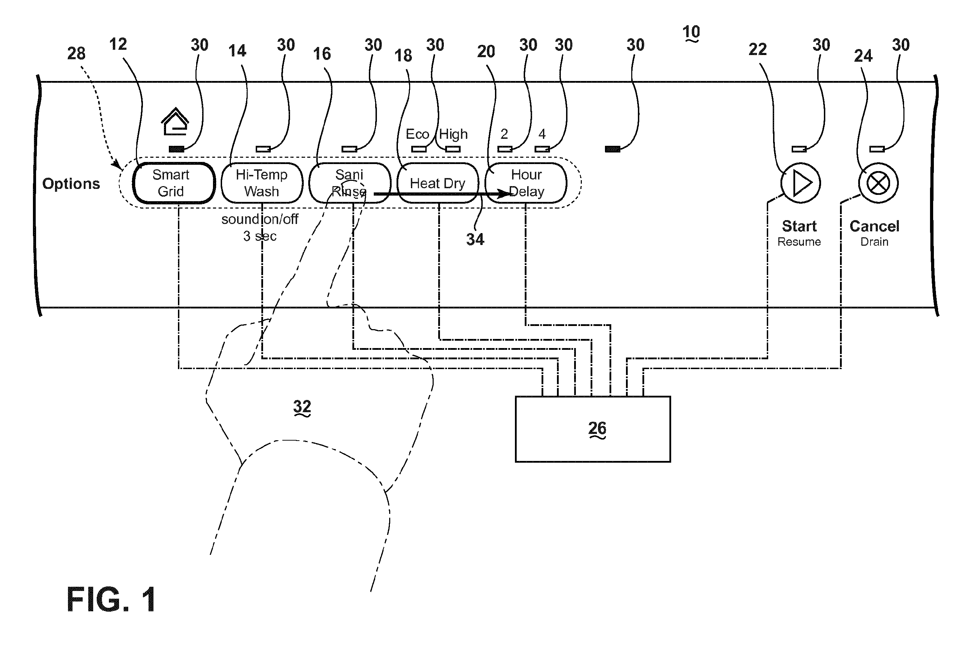

FIG. 1 illustrates one example of a UI 10 on an appliance, such as a dishwasher. The UI 10 may comprises a plurality of discrete touch-sensitive inputs, shown as a "Smart Grid" button 12, "Hi-Temp Wash" button 14, "Sani Rinse" button 16, "Heat Dry" button 18, "Hour Delay" button 20, "Start/Resume" button 22, and "Cancel/Drain" button 24, and a controller 26. As shown, at least a portion of the buttons 12, 14, 16, 18, 20 are arranged adjacently in a row 28. The controller 26 is electrically coupled with each of the buttons 12, 14, 16, 18, 20, 22, 24. The UI 10 is shown further comprising a plurality of indicators, such as light emitting diodes (LEDs) 30, which may correspond to each button 12, 14, 16, 18, 20, 22, 24.

Each button 12, 14, 16, 18, 20, 22, 24 may be configured using, for example, mechanical or capacitive buttons such that the touching, depressing, electro-mechanical actuation, or a change of capacitance of the buttons 12, 14, 16, 18, 20, 22, 24, by the user, generates an input on the UI 10 which is received by the controller 26. One or more LEDs 30 may be arranged for corresponding with particular buttons 12, 14, 16, 18, 20, 22, 24, such that the illumination of an LED 30 may indicate enabled or disabled user selections on the UI 10. The UI 10 may further include additional control or input elements coupled with the controller 26, such as dials, switches, and/or displays, for enabling a user to generate an input. Additionally the UI 10 may include optional output elements, for example, lights, speakers, or vibration devices, to enable the controller 26 to provide responsive information from the UI 10 to the user. While an example button layout is illustrated, alternative button layouts are envisioned wherein the layout may have alternative button configuration, text, cycle or input selections, and/or corresponding LEDs 30.

The controller 26 is operably coupled with the UI 10 such that controller 26 may be capable of detecting the user's touch on one or more buttons 12, 14, 16, 18, 20, 22, 24 and, in response to the detecting of the user's touch, the controller 26 may communicate information to the user (via LEDs 30, audible signal, vibration, etc.), or control performing a cycle of operation.

The UI 10 may further operate in a "locked" state, wherein the controller 26 and/or UI 10 prevents or inhibits user input on the UI 10 from selecting, controlling, or starting any functionality, such as a cycle of operation, in the appliance. This "locked" state is distinguished from the "unlocked" state (previously described), in which user input on the UI 10 affects the operation of the appliance. While locked, the controller 26 and/or UI 10 may still detect user input, even if it may not allow the selection or control of the appliance, such that a UI 10 in a locked state may still detect input and/or change the state to an unlocked state.

The UI 10 operates to actuate between the locked and unlocked states based on user input on the UI 10. For example, the UI 10 and/or controller 26 may be configured to change the operating state when it senses a particular pattern of input from a locked or unlocked UI 10. One example of a particular pattern of input may include a "swipe" gesture defined by a user sequential touching of at least two adjacent inputs, or buttons 12, 14, 16, 18, 20, 22, 24. As shown, a user 32 may start by pressing a first button (for instance, the "Sani Rinse" button 16) in a button row 28, and swiping in a rightward motion 34 across additional buttons 18, 20. The UI 10 and/or controller may first detect the sequential touching of the at least two inputs. If the UI 10 and/or controller 26 determines the input is indicative of the swiping motion by the user 32, for example, by comparing the detected input with a known swiping motion input, the UI 10 and/or controller 26 may actuate, or flip, the operating state, for instance from locked to unlocked, or vice versa.

Additional operational states are envisioned, wherein actuating through the operating states may actuate in a predicable manner, such as sequentially. Alternatively, the UI 10 may display an indication of which state the appliance is currently in, or is actuating to, at the time of actuation. It is also envisioned that additional input patterns may be available for determining actuation between states. For instance, it is envisioned a swipe motion 34 to the right across at least two adjacent buttons 12, 14, 16, 18, 20 in the horizontally-arranged button row 28 may be the only predetermined input pattern that actuates the appliance to an unlocked state. Similarly, a swipe motion 34 to the left across at least two adjacent buttons 12, 14, 16, 18, 20 in the horizontally-arranged button row 28 may be the only predetermined input pattern that actuates the appliance to an unlocked state. However, it is envisioned a single input pattern, such as a swipe motion 34 to the right across at least two adjacent buttons 12, 14, 16, 18, 20, may actuate the UI 10 into both lock and unlock states. Stated another way, one or more motions 34 may control a portion or all of the actuation between states.

The input pattern may include not only predetermined patterns, but user-defined patterns that a user 32 configures during initial setup or later configurations. In another example, the input pattern may be dynamically created at the time of actuating, wherein, for example, a user 32 defines an input pattern while actuating into the locked state, and only that defined pattern may be capable of actuating the UI 10 to the unlocked state. Any of the herein described input patterns may comprise any number of adjacent buttons 12, 14, 16, 18, 20, 22, 24. For example, the input pattern may comprise of two adjacent buttons (e.g. 12 and 14, or 14 and 15, etc.), three adjacent buttons (12, 14, 15, or 14, 16, 18, etc.) four adjacent buttons, and so on, up to the total number of adjacent buttons. Furthermore, operation of the actuation of the UI 10 state is not limited to horizontally-arranged button rows 28.

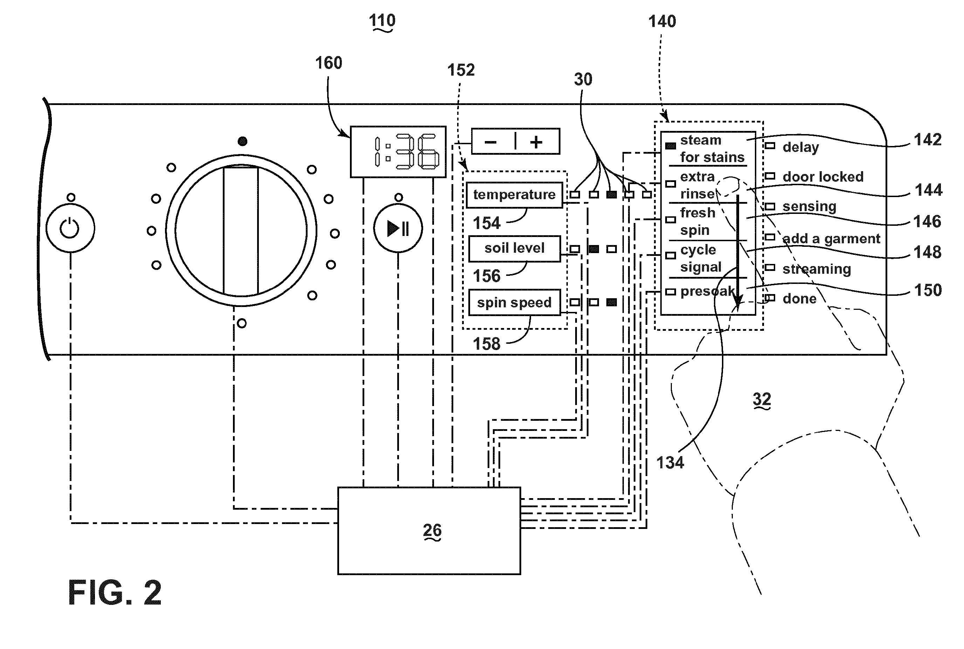

FIG. 2 illustrates an alternative UI 110 according to a second embodiment of the invention. The second embodiment is similar to the first embodiment; therefore, like parts will be identified with like numerals increased by 100, with it being understood that the description of the like parts of the first embodiment applies to the second embodiment, unless otherwise noted. A difference between the first embodiment and the second embodiment is that the UI 110 of the second embodiment illustrates a washing machine interface having a first column 140 of adjacent buttons, including a "Steam for Stains" button 142, an "Extra Rinse" button 144, a "Fresh Spin" button 146, a "Cycle Signal" button 148, and a "Presoak" button 150, a second button column 152 having a "Temperature" button 154, a "Soil Level" button 156, and a "Spin Speed" button 158, and a display 160. In this embodiment, any vertical swipe motion 134 across at least two vertically adjacent buttons 142, 144, 146, 148, 150 in the first button column 140, or at least two vertically adjacent buttons 154, 156, 158 in the second button column 152, corresponding to an input pattern, may actuate the state of the UI 110, as described above.

Another difference between the first embodiment and the second embodiment is that the UI 110 of the second embodiment comprises a second button column 152 having a "Temperature" button 154, a "Soil Level" button 156, and a "Spin Speed" button 158. Embodiments of the invention are envisioned wherein, for instance, a swipe motion 134 in a pattern on the first column 140 may actuate the state of the UI 110 to one state, and wherein a swipe motion 134 in a similar or different pattern on the second column 152 may actuate the state of the UI 110 to another state. It is further envisioned that the actuating of the UI 110 states, or an error in attempting actuation, may further be described to the user on the display 160. Additionally, the display 160 may be configured to provide the user 32 instructions when defining a unique input pattern for UI 110 state actuation.

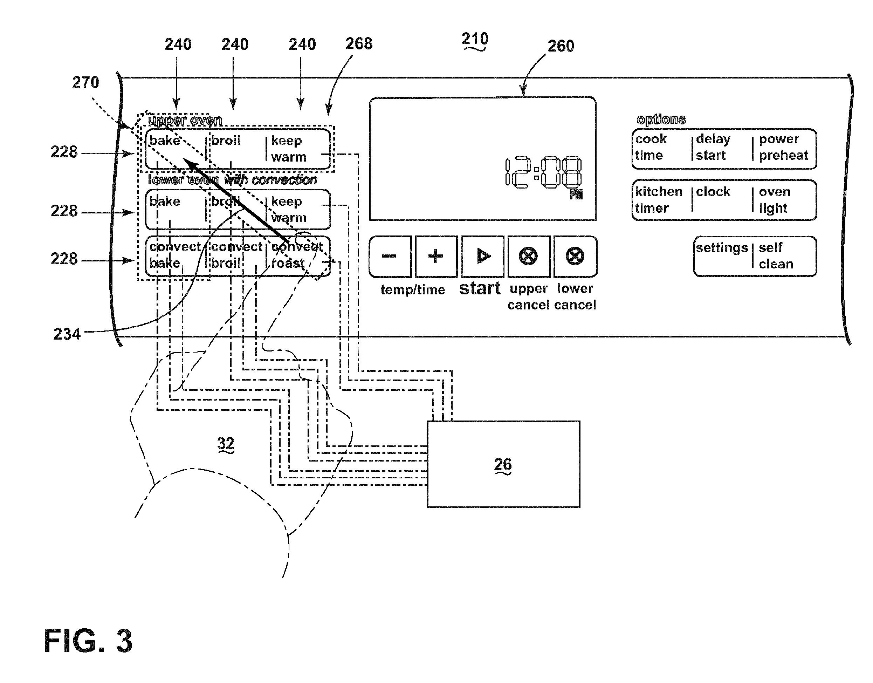

FIG. 3 illustrates an alternative UI 210 according to a third embodiment of the invention. The third embodiment is similar to the first and second embodiments; therefore, like parts will be identified with like numerals increased by 200, with it being understood that the description of the like parts of the first and second embodiments applies to the third embodiment, unless otherwise noted. A difference between the first and second embodiments and the third embodiment is that the UI 210 of the third embodiment illustrates an over interface having a plurality of intersecting button columns 240 and an intersecting button rows 228, defining a button grid 268 of adjacent buttons. For brevity, not all UI 210 connections to the controller 26 are illustrated. The button grid may further include at least one button diagonal 270. In this embodiment, any diagonal swipe motion 234 across at least two diagonally adjacent buttons in any of the plurality of button diagonals 270, corresponding to an input pattern, may actuate the state of the UI 210, as described above. Additionally, an embodiment of the invention is envisioned wherein the predetermined or user-defined input pattern may comprise more than one swipe motion 234. For example, one input pattern using the button grid 268 may incorporate a horizontal swipe across at least two horizontally-adjacent buttons in a button row 228 in addition to, for example, at least two vertically-adjacent buttons in a button column 240. This embodiment may include an input pattern having any combination of adjacent row 228, column 240, or diagonal 270 buttons.

Many other possible embodiments and configurations in addition to that shown in the above figures are contemplated by the present disclosure. For example, one embodiment of the invention contemplates actuating the UI after the lapse of a predetermined time from the end of the sequential touching. In this sense, the predetermined time delay includes sufficient time to allow for additional input detection, in order to avoid prematurely actuating the UI state while, for instance, wiping the UI during cleaning. Additional configurations are envisioned to prevent errant swiping pattern inputs.

The embodiments disclosed herein provide a method for controlling the actuation of a user interface. One advantage that may be realized in the above embodiments may be that the above described embodiments allows for an recognizable gesture to quick actuate the UI state of an appliance, such as locking or unlocking the UI. This method allows for a safer operating environment, for instance, in a house with young children or pets. Thus, the method results in an overall improved user experience. Another advantage to the above described embodiment is that the method allows for user-defined input patterns, which provides an aspect of security for a user when actuating the state of the UI. Even yet another advantage to the above described embodiments may be that by providing an alert or feedback to the user during UI state actuation, the user is able to quickly recognize that the state actuation succeeded or failed.

To the extent not already described, the different features and structures of the various embodiments may be used in combination with each other as desired. That one feature may not be illustrated in all of the embodiments is not meant to be construed that it may not be, but is done for brevity of description. Thus, the various features of the different embodiments may be mixed and matched as desired to form new embodiments, whether or not the new embodiments are expressly described. All combinations or permutations of features described herein are covered by this disclosure. The primary differences among the exemplary embodiments relate to the horizontal, vertical, diagonally, any combination thereof, or any other user motions across UI inputs, and the patterns of these input that actuate the UI, and these features may be combined in any suitable manner to modify the above described embodiments and create other embodiments. For example, a unique multi-motion pattern (as described in the third embodiment) may be used to actuate the UI into both a locked and unlocked state (as described in the first embodiment). For another example, on a UI having both horizontal rows of buttons and vertical columns of buttons, a horizontal swipe (as described in the first embodiment) may actuate the UI into a locked state, while a vertical swipe (as described in the second embodiment) may actuate the UI into an unlocked state.

## Claims

1. A method of controlling the actuation of a user interface (UI) (10) having a plurality of discrete touch-sensitive inputs (12, 14, 16, 18, 20, 22, 24), the method comprising:
detecting a sequential touching of at least two adjacent inputs (12, 14, 16, 18, 20, 22, 24);
determining when the sequential touching is indicative of a swiping motion (34) by a user across the at least two adjacent inputs (12, 14, 16, 18, 20, 22, 24, 22); and actuating the UI (10, 110, 210) when a swiping motion (34) is indicated.

2. The method of claim 1 wherein detecting a touch on the inputs (12, 14, 16, 18, 20, 22, 24) comprises at least one of detecting electro-mechanical actuation of an input (12, 14, 16, 18, 20, 22, 24) or detecting a change in capacitance of an input (12, 14, 16, 18, 20, 22, 24).

3. The method of claim 1 wherein the actuating the UI (10, 110, 210) comprises actuating the UI (10, 110, 210) after the lapse of a predetermined time from the end of the sequential touching.

4. The method of claim 3 wherein the timed delay comprises sufficient time to prevent unintended input from activating the UI (10, 110, 210).

5. The method of claim 1 wherein the detecting a sequential touching of at least two adjacent inputs (12, 14, 16, 18, 20, 22, 24) comprises detecting a sequential touching of at least two horizontally adjacent inputs (12, 14, 16, 18, 20, 22, 24), detecting a sequential touching of at least two vertically adjacent inputs (12, 14, 16, 18, 20, 22, 24), detecting a sequential touching of at least two diagonally adjacent inputs (12, 14, 16, 18, 20, 22, 24), or detecting a sequential touching of less than all of the plurality of inputs (12, 14, 16, 18, 20, 22, 24).

6. The method of claim 5 wherein detecting a sequential touching of less than all of the plurality of inputs (12, 14, 16, 18, 20, 22, 24) comprises detecting a sequential touching of less than all of a row of the plurality of inputs (12, 14, 16, 18, 20, 22, 24), detecting a sequential touching of less than all of a column of the plurality of inputs (12, 14, 16, 18, 20, 22, 24), or detecting a sequential touching of less than all of a diagonal arrangement of the plurality of inputs (12, 14, 16, 18, 20, 22, 24).

7. The method of claim 1 wherein the sequential touching of at least two adjacent inputs (12, 14, 16, 18, 20, 22, 24) is determined by determining a pattern of touching.

8. The method of claim 1 wherein the actuating the UI (10, 110, 210) comprises at least one of locking the UI (10, 110, 210) or unlocking the UI (10, 110, 210).

9. The method of claim 8 wherein locking the UI (10, 110, 210) comprises limiting operation of the UI (10, 110, 210) by the user, except to unlock the UI (10, 110, 210).

10. The method of claim 8 wherein unlocking the UI (10) comprises allowing operation of the UI (10, 110, 210) by the user to initiate a cycle of operation.

11. The method of claim 8 wherein the sequential touching of at least two adjacent inputs (12, 14, 16, 18, 20, 22, 24) is determined by determining a pattern of touching.

12. The method of claim 11 wherein both the locking the UI (10, 110, 210) and the unlocking the UI (10, 110, 210) occur based on the determining of a common pattern.

13. The method of claim 11 wherein the determining whether the detected input (12, 14, 16, 18, 20, 22, 24) indicates a pattern further comprises comparing the detected pattern with at least one of at least one predetermined pattern or at least one user-programmable pattern.

14. The method of claim 11 wherein determining whether the detected input (12, 14, 16, 18, 20, 22, 24) indicates a pattern further comprises determining whether the detected input (12, 14, 16, 18, 20, 22, 24) indicates one of a plurality of patterns.

15. The method of claim 11 wherein actuating the UI (10, 110, 210) further comprises at least one of locking the UI (10, 110, 210) when it is determined the detected input (12, 14, 16, 18, 20, 22, 24) indicates a locking pattern or unlocking the UI (10, 110, 210) when it is determined the detected input (12, 14, 16, 18, 20, 22, 24) indicates an unlocking pattern.
